(19) Europäisches Patentamt

European Patent Office

Office européen des brevets

(11) Publication number: **0 417 758 B1**

## EUROPEAN PATENT SPECIFICATION

(45) Date of publication of patent specification: **01.06.94**   (51) Int. Cl.[5]: **G11B 5/708**

(21) Application number: **90117546.3**

(22) Date of filing: **12.09.90**

The file contains technical information submitted after the application was filed and not included in this specification

(54) **Magnetic recording medium.**

(30) Priority: **12.09.89 JP 236082/89**

(43) Date of publication of application:
**20.03.91 Bulletin 91/12**

(45) Publication of the grant of the patent:
**01.06.94 Bulletin 94/22**

(84) Designated Contracting States:
**DE FR GB**

(56) References cited:
**EP-A- 0 352 757**
**DE-A- 3 323 596**
**US-A- 4 626 469**

(73) Proprietor: **KAO CORPORATION**
**14-10, Nihonbashi Kayabacho 1-chome**
**Chuo-ku Tokyo(JP)**

(72) Inventor: **Nakanishi, Kuniyuki, c/o Kao Corporation**
**Infor. Science Res. Inst.,**
**2606 Oaza Akabane**
**Ichikai-machi, Haga-gun, Tochigi(JP)**
Inventor: **Shirasaki, Yoshitsugu, c/o Kao Corporation**
**Infor. Science Res. Inst.,**
**2606 Oaza Akabane**
**Ichikai-machi, Haga-gun, Tochigi(JP)**

(74) Representative: **Hansen, Bernd, Dr.**
**Dipl.-Chem. et al**
**Hoffmann, Eitle & Partner**
**Patent- und Rechtsanwälte,**
**Postfach 81 04 20**
**D-81904 München (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services
(3.10/3.09/3.3.3)

**Description**

The present invention relates to a magnetic recording medium. More particularly, the present invention relates to a magnetic recording medium which exhibits decreased abrasion of the recording head.

Magnetic recording mediums normally contain carbon black in their magnetic layer to meet requirements for antistatic treatment and light transmission. Further, in order to inhibit the scraping of the magnetic layer which is attached to the head and causes increased drop out or drop in output, magnetic recording media normally contain an alumina, a chromium oxide or other hard materials. For example, US-A-4,626,469 and DE-A-33 23 596 disclose the magnetic recording material containing the above described constituents.

However, the use of a carbon black causes a drop in the dispersibility of the resulting coating which adversely affects the properties of the final products. The incorporation of the alumina, the chromium oxide or the like increases the rigidity of the coating film which provides the resulting magnetic recording mediums with a higher abrasion resistance but causes abrasion of the magnetic head resulting in various troubles.

It is an object of the present invention to provide a magnetic recording medium which exhibits an improved abrasion resistance of the magnetic head, that is does not significantly abrade the magnetic head.

The above and other objects of the present invention will become more apparent from the following detailed description and examples.

The inventors found that when two kinds of a carbon black having a specified range of grain diameter are used in specified weight proportions and an alumina or a chromium oxide also having a specified range of grain diameter is used in a specified weight proportion, a magnetic coating having an excellent dispersibility can be obtained from which a magnetic recording medium having an improved abrasion resistance of the head can be prepared.

These objects of the present invention are accomplished with a magnetic recording medium which comprises a non-magnetic support coated thereon a magnetic layer comprising ferromagnetic powders, wherein the magnetic layer further comprises:

(a) a carbon black having a mean grain diameter of 20 to 40 nm and (b) a carbon black having a mean grain diameter of 50 to 150 nm in a weight proportion of (a) to (b) of 50/50 to 90/10 and in a total amount of (a) and (b) of 5 to 30 % by weight based on the weight of the ferromagnetic powders; and

(c) an alumina or a chromium oxide having a mean grain diameter of 0.2 to 0.6 $\mu$m in an amount of 0.2 to 10 % by weight based on the weight of the ferromagnetic powder. The magnetic layer may also contain other ingredients.

DETAILED DESCRIPTION OF THE INVENTION

In the present invention, (a) the carbon black having a mean grain diameter of 20 to 40 nm, preferably 20 to 30 nm, and (b) the carbon black having a mean grain diameter of 50 to 150 nm, preferably 70 to 120 nm, are incorporated into a magnetic coating in a weight proportion of (a) to (b) of 50/50 to 90/10, preferably 50/50 to 85/15, and in a total amount of (a) and (b) of 5 to 30 % by weight, preferably 5 to 25 % by weight, based on the weight of the ferromagnetic powders.

The alumina or the chromium oxide to be used as component (c) in the present invention has a mean grain diameter of 0.2 to 0.6 $\mu$m and is incorporated in the magnetic coating in an amount of 0.2 to 10 % by weight, preferably 0.2 to 6 % by weight, more preferably 0.3 to 6 % by weight, based on the weight of the ferromagnetic powders.

As the chromium oxide, one represented by the molecular formula of $Cr_2O_3$ is particularly preferred.

Illustrative embodiments of the present magnetic recording medium include magnetic tapes. In particular, the present magnetic recording medium is adapted for use in fixed head type drives.

The present invention will be further described in the following examples, but the present invention should not be construed to as being limited thereby. Unless otherwise indicated, all ratios, parts and percentages are by weight.

EXAMPLES 1 - 4 and COMPARATIVE EXAMPLES 1 - 3

A coating blend having the following composition was stirred in a basket mill (produced by Asada Tekko K.K.). 4.5 parts by weight of Colonate L (trade name, a trimethylol propane triisocyanate produced by Nippon Polyurethane Kogyo K.K.) was added to the blend. The mixture was then kneaded over several minutes, deformed, and filtered out to obtain a magnetic coating. The coating was coated on a 10.5-$\mu$m

thick PET (polyethylene terephthalate) film so as to give a dried film thickness of 1.5 $\mu$m. The coated material was then magnetically oriented under 1,500 G, and dried to form a magnetic layer on the PET film. The coated material was then wound on a roll. The magnetic layer was then calendered at a temperature of 80°C.

## Composition of coating blend for magnetic layer:

| | |
|---|---|
| Co-covered $\gamma$-Fe$_2$O$_3$ (Hc = 550 Oe) | 100 parts |
| GAFAC RE-610 *1 | 3 parts |
| Carbon black (a)<br>(mean grain diameter: 20 nm) | an amount set forth in Table 1 |
| Carbon black (b)<br>(mean grain diameter:<br>80 or 200 nm) | an amount set forth in Table 1 |
| $\alpha$-Al$_2$O$_3$ (mean grain diameter: 0.2 to 1.0 $\mu$m)<br>or<br>Chromium oxide (Cr$_2$O$_3$)<br>(meaning grain diameter: 0.2 $\mu$m) | an amount set forth in Table 1 |
| VAGH *2 | 20 parts |
| Nippolan 2301 *3 | 10 parts |
| Butyl stearate | 4 parts |
| Solvent mixture *4 | 300 parts |

Note:  *1:  trade name, a phosphoric dispersant produced by Toho Kagaku K.K.

*2:  trade name, a vinyl chloride/vinyl acetate/ polyvinyl alcohol copolymer produced by Union Carbide Co.

*3:  trade name, a polyurethane resin produced by Nippon Polyurethane Kogyo K.K.

*4:  80/80/140 mixture of methyl ethyl ketone/ toluene/cyclohexanone.

A coating for the back coat was then prepared by kneading a blend consisting of a carbon black, nitrocellulose, polyurethane, and a solvent mixture in a ball mill over several hours, and then colonate L was added to the mixture followed by kneading. The coating thus obtained was then coated on the other side of the PET film on which the magnetic layer had been formed so as to give a dried film thickness of 1.5 $\mu$m. The coated material was then dried to form a back coat layer on the PET film, then wound on a roll. The material was then cured at a temperature of 60°C. The material was then slit into a 6.4 mm (1/4-inch) wide tape. Thus, a pancake magnetic tape was obtained.

The pancake magnetic tape was then examined in head abrasion resistance in accordance with the following method. The pancake was also examined in a cassette for the rise in the number of drop outs after 5,000 pass running in accordance with the following method.

1) Head abrasion resistance:

The pancake magnetic tape was subjected to repeated running 10 times at a speed of 150 m/min. over 150m (500 feet) in a winding machine with the magnetic layer kept in contact with an imitation head such as an Fe-Al-Si alloy test piece (Fe: 85 %; Al: 5.4 %; Si: 9.6 %) or brass test piece used as head material. The Fe-Al-Si test piece was examined for abrasion width, and the brass test piece was examined for abrasion loss.

2) Number of drop outs (error):

The pancake magnetic tape was wound in a cassette. A certain predetermined test signal was recorded on the magnetic tape. The cassette was mounted in a drive for signal reproduction. The number of initial errors was then determined. After repeated 5000 pass running, the certain signal was recorded on the magnetic tape. The cassette was again in the drive for signal reproduction. The number of errors after running was then determined.

EP 0 417 758 B1

The results are set forth in Table 1.

TABLE 1

| | Example | | | | | Comparative Example | | |
|---|---|---|---|---|---|---|---|---|
| | 1 | 2 | 3 | 4 | 5 | 6 | 7 | 8 |
| Carbon Black (a) (mean grain diameter(nm)/weight part) | 20/6 | 20/8 | 20/8 | 20/13 | 20/8 | 20/8 | 20/5 | 20/8 |
| Carbon black (b) (mean grain diameter(nm)/weight part) | 80/4 | 80/2 | 80/5 | 80/7 | 80/4 | – | 200/5 | 80/5 |
| Alumina (mean grain diameter ($\mu$m)/weight part) | 0.2/0.5 | 0.3/1.5 | 0.2/0.5 | 0.2/3 | | 0.3/4 | 0.3/4 | 1.0/2.5 |
| Chromium oxide ($Cr_2O_3$) (mean grain diameter ($\mu$m)/ weight part) | | | | | 0.2/0.5 | | | |
| Head abrasion loss: | | | | | | | | |
| Fe-Al-Si alloy ($\mu$m) | 8 | 12 | 7 | 9 | 10 | 80 | 79 | 90 |
| Brass (mg) | 0.010 | 0.009 | 0.008 | 0.011 | 0.011 | 0.17 | 0.14 | 0.28 |
| Number of error: [1] | | | | | | | | |
| Initial | 0.30 | 0.40 | 0.35 | 0.39 | 0.34 | 0.8 | 0.6 | 1.0 |
| 5000 passes | 0.71 | 0.81 | 0.65 | 0.90 | 0.68 | 1.2 | 1.8 | 2.3 |

Note: [1]: the number per (100 feet) 30.5m

## Claims

1. A magnetic recording medium which comprises a non-magnetic support coated thereon a magnetic layer comprising ferromagnetic powders, wherein the magnetic layer further comprises:
(a) a carbon black having a mean grain diameter of 20 to 40 nm and (b) a carbon black having a mean grain diameter of 50 to 150 nm in a weight proportion of (a) to (b) of 50/50 to 90/10 and in a total amount of (a) and (b) of 5 to 30 % by weight based on the weight of the ferromagnetic powders; and
(c) an alumina or a chromium oxide having a mean grain diameter of 0.2 to 0.6 $\mu$m in an amount of 0.2 to 10% by weight based on the weight of the ferromagnetic powders.

2. A magnetic recording medium as claimed in Claim 1, wherein the mean grain diameter of said carbon black (a) is 20 to 30 nm and the mean grain diameter of said carbon black (b) is 70 to 120 nm.

3. A magnetic recording medium as claimed in Claim 1, wherein the weight proportion of (a) to (b) is 50/50 to 85/15, the total amount of (a) and (b) is 5 to 25 % by weight based on the weight of the ferromagnetic powders, and the amount of the alumina or the chromium oxide is 0.2 to 6 % by weight based on the weight of the ferromagnetic powders.

4. Use of the magnetic recording medium according to Claims 1 to 3 for fixed head drives.

## Patentansprüche

1. Magnetisches Aufzeichnungsmedium, umfassend einen nichtmagnetischen Träger und darauf aufgezogen eine magnetische Schicht, die ferromagnetische Pulver umfaßt, dadurch **gekennzeichnet**, daß die magnetische Schicht außerdem umfaßt:
(a) einen Ruß mit einem mittleren Korndurchmesser von 20 bis 40 nm und (b) einen Ruß mit einem mittleren Korndurchmesser von 50 bis 150 nm in einem Gewichtsverhältnis von (a) zu (b) von 50/50 bis 90/10 und in einer Gesamtmenge von (a) und (b) von 5 bis 30 Gew.-%, bezogen auf das Gewicht der ferromagnetischen Pulver; und
(c) ein Aluminiumoxid oder Chromoxid mit einem mittleren Korndurchmesser von 0,2 bis 0,6 $\mu$m in einer Menge von 0,2 bis 10 Gew.-%, bezogen auf das Gewicht der ferromagnetischen Pulver.

2. Magnetisches Aufzeichnungsmedium gemäß Anspruch 1, dadurch **gekennzeichnet**, daß der mittlere Korndurchmesser des Rußes (a) 20 bis 30 nm beträgt und der mittlere Korndurchmesser des Rußes (b) 70 bis 120 nm beträgt.

3. Magnetisches Aufzeichnungsmedium gemäß Anspruch 1, dadurch **gekennzeichnet**, daß das Gewichtsverhältnis von (a) zu (b) 50/50 bis 85/15 beträgt, die Gesamtmenge von (a) und (b) 5 bis 25 Gew.-%, bezogen auf das Gewicht der ferromagnetischen Pulver beträgt und die Menge des Aluminiumoxids oder Chromoxids 0,2 bis 6 Gew.-%, bezogen auf das Gewicht der ferromagnetischen Pulver, beträgt.

4. Verwendung des magnetischen Aufzeichnungsmediums gemäß den Ansprüchen 1 bis 3 für Laufwerke mit fixiertem Kopf.

## Revendications

1. Milieu d'enregistrement magnétique qui comprend un support amagnétique sur lequel est appliquée une couche magnétique comportant des poudres ferromagnétiques, dans lequel la couche magnétique comprend en outre :
(a) un noir de carbone ayant un diamètre moyen des grains de 20 à 40 nm et (b) un noir de carbone ayant un diamètre moyen des grains de 50 à 150 nm dans une proportion pondérale entre (a) et (b) de 50/50 à 90/10 et dans une quantité totale de (a) et (b) de 5 à 30 % en poids par rapport au poids des poudres ferromagnétiques; et
(c) une alumine ou un oxyde de chrome ayant un diamètre moyen des grains de 0,2 à 0,6 $\mu$m dans une quantité de 0,2 à 10 % en poids par rapport au poids des poudres ferromagnétiques.

2. Milieu d'enregistrement magnétique selon la revendication 1, dans lequel le diamètre moyen des grains dudit noir de carbone (a) est 20 à 30 nm et le diamètre moyen des grains dudit noir de carbone (b) est 70 à 120 nm.

3. Milieu d'enregistrement magnétique selon la revendication 1, dans lequel la proportion pondérale entre (a) et (b) est 50/50 à 85/15, la quantité totale de (a) et (b) est 5 à 25 % en poids par rapport au poids des poudres ferromagnétiques, et la quantité de l'alumine ou de l'oxyde de chrome est 0,2 à 6 % en poids par rapport au poids des poudres ferromagnétiques.

4. Utilisation du milieu d'enregistrement magnétique selon les revendications 1 à 3 pour des unités d'entraînement à tête fixe.